Europäisches Patentamt

European Patent Office

Office européen des brevets

(19)

(11) Publication number: **0 002 940**
**B1**

(12) **EUROPEAN PATENT SPECIFICATION**

(45) Date of publication of patent specification: **07.07.82**

(21) Application number: **78300883.2**

(22) Date of filing: **21.12.78**

(51) Int. Cl.³: **A 01 N 43/64,**
**C 07 D 249/00**

(54) Synergistic fungicidal combination of triadimefon and chlorothalonil and its use and formulations.

(30) Priority: **27.12.77 US 864894**

(43) Date of publication of application:
**11.07.79 Bulletin 79/14**

(45) Publication of the grant of the patent:
**07.07.82 Bulletin 82/27**

(84) Designated Contracting States:
**DE GB IT NL SE**

(56) References cited:
**GB - A - 1 265 856**
**GB - A - 1 365 619**

(73) Proprietor: **ELI LILLY AND COMPANY**
**307, East McCarty Street**
**Indianapolis Indiana 46285 (US)**

(72) Inventor: **Schwer, Joseph Francis**
**774, West Weber Road**
**Greenfield Indiana 46140 (US)**
Inventor: **Brown, Irwin Frederick, Jr.**
**11045, Winding Brook Lane**
**Indianapolis Indiana 46280 (US)**

(74) Representative: **Crowther, Terence Roger**
**European Patent Attorney et al,**
**Erl Wood Manor**
**Windlesham Surrey GU20 6PH (GB)**

Courier Press, Leamington Spa, England.

Synergistic fungicidal combination of triadimefon and chlorothalonil
and its use and formulation

This invention relates to a novel combination particularly effective in controlling fungal infections of cultivated plants.

Many plants of economic and decorative importance are damaged annually by various types of fungi. Because of the financial losses involved, a great deal of research has been done in an attempt to find methods and substances for the control of these deleterious fungi.

Triadimefon is identified as 1 - (4 - chlorophenoxy) - 3,3 - dimethyl - 1 - (1,2,4 - triazol - 1 - yl) - butan - 2 - one. This compound and its salts with physiologically compatible acids are described and claimed in U.S. 3,912,752 (October 14, 1975), and is alleged to show considerably higher and broader plant fungicidal activity than n - dodecylguanidine action.

Further in the prior art is U.S. 4,005,083 (January 25, 1977), which discloses and claims metal complexes of azolyl ethers, including triadimefon. These metal complexes also have plant fungicidal activity.

Chlorothalonil, also named tetrachloro-isophthalonitrile, and identified as 2,4,5,6 - tetrachloro - 1,3 - dicyanobenzene, is described in both U.S. Patent No. 3,290,353 (December 6, 1966), and in U.S. Patent No. 3,331,735 (July 18, 1967), as being active as a plant fungicide.

There has now been discovered a synergistic fungicidal composition containing as active ingredients appropriate amounts of each of triadimefon, or salts thereof, and chlorothalonil and a method for treating fungal infections of cultivated plants, especially cereals, using the composition.

This invention relates to a method for controlling fungal infections of cultivated plants such as celery and squash, and especially cereals. Thus, this invention relates to a method of controlling the early blight of celery caused by *Cercospora apii;* the powdery mildew of squash caused by *Erysiphe cichoracearum*; the downy mildew of squash caused by *Pseudoperonospora cubensis;* the leafspot on sugar beet caused by *Cecospora lbeticola.* More particularly, this invention relates to a method of controlling fungal infections of cereals caused by plant pathogenic fungi selected from the group consisting of *Septoria nodorum, Puccinia recondita, Puccinia graminis tritica,* and *Puccinia glumarum.* In particular this invention relates to a method of controlling fungal infection of cereals caused by *Puccinia recondita.*

The method of controlling fungal infections of cereals is carried out by applying to the foliage of the host plants a fungicidally-effective amount of a composition comprising synergistic proportions of an active first ingredient triadimefon, and salts thereof, and an active co-ingredient, chlorothalonil.

In particular, the method of controlling the fungal infection of cereals caused by *Puccinia recondita* is accomplished by applying to the foliage of the host plants a fungicidally-effective amount of a composition comprising synergistic proportions of an active first ingredient, triadimefon, or salts thereof, and an active co-ingredient, chlorothalonil.

This invention also relates to novel fungicidal compositions comprising synergistic proportions of an active first ingredient triadimefon, or salts thereof, and an active co-ingredient, chlorothalonil.

In order to determine that the fungicidal effect obtained by combining triadimefon and chlorothalonil is synergistic, as compared to the control of the fungus accomplished by either of the two substances applied alone, the formula developed by S. R. Colby, *Weeds 15*, 20—22 (1967) is used. As is well-known to those working in the field of plant science, if the value obtained by use of the Colby equation is less than the actual control produced by application of the combination of triadimefon and chlorothalonil, then synergism is considered to have occurred between the two active ingredients in their effect on the fungi.

In operating according to the method of the present invention, the fungi to be controlled are contacted by the antifungal combination according to the following general procedures. The antifungal combination is applied to infected or susceptible plant surfaces in any convenient fashion, such as spraying or dusting. A spray method is preferable, the novel combination being applied at any time after crop emergence up until harvest, the actual frequency and duration of treatment being determined by the severity of the actual or expected disease. In spraying, it is usually sufficient for the infected or susceptible surfaces to be thoroughly wet with the liquid dispersion employed. Good results have been obtained by employing spray compositions whether they be emulsions or aqueous dispersions of solid concentrates. The antifungal substances can also be used for treatment of seed as one embodiment of the antifungal method.

The combinations used in the present invention can be applied as a tank mix, wherein the particular active ingredients are formulated separately and then combined in the tank for application. Alternatively, the active ingredients may be formulated as a combination ready to be diluted and applied. Or, if desired, the active ingredients can be formulated separately and applied at the same time, but separately, in successive applications.

Thus, the practice of the present method of controlling plant pathogenic fungi is considered to include application of as a first ingredient triadimefon, together with, as co-ingredient, chlorothalonil, as described above, as a preformulated fungicidal composition, as a tank mix, or by successive application of the individual active ingredients.

In the practice of the novel fungicidal method in the greenhouse, the triadimefon is applied as a spray at the rate of from about 5 ppm. to about 20 ppm. active ingredient, while chlorothalonil, the co-ingredient, is also applied as a spray at the rate of from about 25 ppm. to about 100 ppm. active ingredient (giving a weight ratio range of triadimefon to chlorothalonil of 1:1.25 to 1:20).

Those skilled in the art of the use of chemicals for the control of plant pathogenic fungi readily understand that the application rates of the active ingredients generally are higher for field application. Thus, in the field the triadimefon ingredient is preferably applied in an amount of from 0.0025 to 0.099 kg/ha. The chlorothalonil, the co-ingredient, is preferably applied in an amount of from 0.25 to 0.99 kg/ha. A preferred ratio of the triadimefon to the chlorothalonil is from 1:50 to 1:2.5, most preferably from 1:10 to 1:2.5 parts by weight. For controlling *Puccinia recondita* fungal infections of cereals a particularly preferred ratio is from 1:20 to 1:5.

The novel combination of the invention is preferably utilized in the form of a fungicidal formulation comprising the triadimefon and the chlorothalonil associated with a nonphytotoxic, inert carrier therefor.

The fungicidal formulations of the invention may comprise from about 5 to about 90% by weight of active ingredients and will usually be in the form of a wettable powder or dust, or an aqueous suspension.

The triadimefon and the chlorothalonil may be employed in the form of wettable powders, emulsifiable concentrates, as the unformulated technical material, or in whatever other formulation in which they are available, any of which forms of the active ingredients are then diluted, suspended, dissolved, or mixed with suitable additives, in order to prepare the desired combination of the triadimefon first ingredient, and chlorothalonil co-ingredient for application to control the fungi.

Wettable powders or dusts are comprised of an intimate mixture of (1) the active ingredients, (2) one or more inert carriers, and (3) appropriate surfactants. The inert carrier may be chosen from the attapulgite clays, the montmorillonite clays, the diatomaceous earths, kaolins, micas, talcs and purified silicates. Effective surfactants may be found among the sulfonated lignins, the naphthalene sulfonates and condensed naphthalene sulfonates, the alkyl succinates, the alkylbenzene sulfonates, the alkyl sulfates and nonionic surfactants such as ethylene oxide adducts of phenol.

Aqueous suspensions are comprised of the active ingredients suspended in water together with any desired surfactants, thickening agents, anti-freezing agents or preservatives. Suitable surfactants may be chosen from those mentioned above in connection with wettable powders. Thickening agents, if used, are normally chosen from appropriate cellulose materials and natural gums whilst glycols will generally be used when an antifreezing agent is required. Preservatives, if needed, may be chosen from a wide range of materials such as the various paraben antibacterials, phenol 2 - chloro - 4 - hydroxytoluene, phenyl mercuric nitrate and formaldehyde.

The novel synergistic fungicidal compositions are then applied to plants in effective amounts, varying somewhat with the particular organism, with the severity of the infection, and with other factors such as the environment in which treatment is conducted.

The methods for the preparation of triadimefon and its salts with physiologically compatible acids are disclosed in Meiser *et al.*, U.S. Patent No. 3,912,752 (October 14, 1975). The methods of preparation are thus well known and readily available in the prior art.

The triadimefon may be formulated according to methods disclosed in Meiser *et al., supra.* Triadimefon is commercially available formulated as 5% and 25% active ingredient wettable powders; as an emulsifiable concentrate of 100 g active ingredient/liter; and as a dust 1% active ingredient.

The co-ingredient chlorothalonil, is prepared according to the disclosure of U.S. Patent No. 3,290,353 (Dec. 6, 1966). Chlorothalonil is commercially available formulated as a 75 percent wettable powder (75 WP), or as a 6 lb/gal flowable formulation (6 F).

The synergistic effect of the combined application of triadimefon with chlorothalonil is demonstrated by the following tests conducted in the greenhouse.

Test 1

The efficacy of combinations of triadimefon and chlorothalonil, for the control of wheat leaf rust (*Puccinia recondita*) was determined in the greenhouse, using concentrations of triadimefon (25 WP) of 5, 10 or 20 ppm in combination with 25, 50 or 100 ppm of chlorothalonil (75 WP). Triadimefon was also evaluated alone at 5, 10 or 20 ppm., and chlorothalonil was also evaluated alone at 25, 50, and 100 ppm of active ingredient.

The triadimefon used was formulated as a 25 WP, and the chlorothalonil as a 75 WP. The treatment solutions were prepared by dilution of the triadimefon 25 WP or the chlorothalonil 75 WP with tap water to the necessary concentrations.

Wheat plants of the variety Monon were grown in plastic pots, each pot containing approximately 50 wheat plants. Each treatment was sprayed on the plants in two plastic pots at the time the plants were seven days old, spraying continuing until runoff occurred. After drying, the plants were inoculated with spores of the wheat leaf rust fungus, and the pots and plants were placed in a moist chamber for about 40 hours and then moved to the greenhouse for development of the disease.

Two weeks after the plants were placed in the greenhouse, they were examined visually to determine the percent disease incidence and this figure was converted to percent disease control. The results appear in Table 1, which follows.

TABLE 1

Percent Control of
Wheat Leaf Rust
Chlorothalonil 75 WP

| Treatments | PPM | 0 | 25 | 50 | 100 |
|---|---|---|---|---|---|
| Triadimefon | 0 | 0 | 36 | 64 | 57 |
| 25 WP | 5 | 0 | 36 | 50 | 89 |
| | 10 | 14 | 36 | 68 | 89 |
| | 20 | 14 | 64 | 79 | 93 |

The results of these experiments show the existence of a synergistic effect between triadimefon and chlorothalonil at various combinations of application rates. In the above Table, it will be appreciated that the weight ratio of triadimefon to chlorothalonil is from 1:1.25 (20 ppm triadimefon to 25 ppm chlorothalonil) to 1:20 (5 ppm triadimefon to 100 ppm chlorothalonil), which ratio range is also preferred.

**Claims**

1. A fungicidal composition comprising, as active ingredients, triadimefon or a salt thereof and chlorothalonil, the weight ratio of triadimefon to chlorothalonil being in the range of from 1:50 to 1:2.5, triadimefon being 1 - (4 - chlorophenoxy) - 3,3 - dimethyl - 1 - (1,2,4 - triazol - 1 - yl) - butan - 2 - one and chlorothalonil being tetrachloroisophthalonitrile.

2. A fungicidal composition comprising, as active ingredients, triadimefon or a salt thereof and chlorothalonil, the weight ratio of triadimefon to chlorothalonil being in the range of from 1:20 to 1:1.25, triadimefon being 1 - (4 - chlorophenoxy) - 3,3 - dimethyl - 1 - (1,2,4 - triazol - 1 - yl) - butan - 2 - one and chlorothalonil being tetrachloroisophthalonitrile.

3. A fungicidal composition according to claim 1 or 2, wherein said ratio is in the range of from 1:10 to 1:2.5.

4. A fungicidal composition according to any one of claims 1 to 3 for use in controlling fungal infection of cereals caused by *Puccinia recondita.*

5. A method of controlling fungal infections of cultivated plants which comprises employing the fungicidally active compounds triadimefon or a salt thereof and chlorothalonil in a weight ratio range of the triadimefon to the chlorothalonil of from 1:50 to 1:2.5, triadimefon being 1 - (4 - chlorophenoxy) - 3,3 - dimethyl - 1 - (1,2,4 - triazol - 1 - yl) - butan - 2 - one and chlorothalonil being tetrachloroisophthalonitrile.

6. A method of controlling fungal infections of cultivated plants which comprises employing the fungicidally active compound triadimefon or a salt thereof and chlorothalonil in a weight ratio range of the triadimefon to the chlorothalonil of from 1:20 to 1:1.25, triadimefon being 1 - (4 - chlorophenoxy) - 3,3 - dimethyl - 1 - (1,2,4 - triazol - 1 - yl) - butan - 2 - one and chlorothalonil being tetrachloroisophthalonitrile.

7. A method according to claim 5 or claim 6 for controlling fungal infection of cereals caused by *Puccinia recondita.*

8. A method according to claim 7, wherein the weight ratio of tridimefon to chlorothalonil is in the range of from 1:20 to 1:5.

9. A method according to any one of claims 5 to 8, wherein the triadimefon is applied in an amount of from 0.0025 to 0.099 kg/ha.

10. A method according to any one of claims 5 to 8, wherein the chlorothalonil is applied in an amount of from 0.25 to 0.99 kg/ha.

**Revendications**

1. Composition fongicide comprenant, comme ingrédients actifs, le triadiméfon ou un de ses sels et le chlorothalonil, le rapport pondéral du triadiméfon au chlorothalonil étant dans un intervalle d'environ 1:50 à 1:2,5, le triadiméfon étant la 1 - (4 - chlorophénoxy) - 3,3 - diméthyl - 1 - (1,2,4 - triazol - 1 - yl) - butan - 2 - one et le chlorothalonil étant le tétrachloroisophtalonitrile.

2. Composition fongicide comprenant, comme ingrédients actifs le triadiméfon ou un de ses sels et le chlorothalonil, le rapport ponderal du triadiméfon au chlorothalonil étant dans un intervalle de 1:20 à 1:1,25 le triadiméfon étant la 1 - (4 - chlorophénoxy) - 3,3 - diméthyl - 1 - (1,2,4 - triazol - 1 - yl) - butan - 2 - one et le chlorothalonil étant le tétrachloroisophtalonitrile.

3. Composition fongicide selon les revendications 1 ou 2, où ledit rapport est dans un intervalle allant de 1:10 à 1:2,5.

4. Composition fongicide selon l'une quelconque des revendications 1 à 3 aux fins d'application dans la lutte contre l'infection fongique des céréales causée par *Puccinia recondita*.

5. Procédé de lutte contre les infections fongiques des plantes cultivées qui implique d'employer des quantités fongicidement actives des composés triadiméfon ou un de ses sels et chlorothalonil dans un intervalle de rapport pondéral du triadiméfon au chlorothalonil de 1:50 à 1:2,5, le triadiméfon étant la 1 - (4 - chlorophénoxy) - 3,3 - diméthyl - 1 - (1,2,4 - triazol - 1 - yl) - butan - 2 - one et le chlorothalonil étant le tétrachloroisophtalonitrile.

6. Procédé de lutte contre les infections fongiques des plantes cultivées qui implique d'employer le composé fongicidement actif triadiméfon ou un de ses sels et chlorothalonil dans un intervalle de rapport pondéral du triadiméfon au chlorothalonil allant de 1:20 à 1:1,25, le triadiméfon étant la 1 - (4 - chlorophénoxy) - 3,3 - diméthyl - 1 - (1,2,4 - triazol - 1 - yl) - butan - 2 - one et le chlorothalonil étant le tétrachloroisophtalonitrile.

7. Procédé selon la revendication 5 ou la revendication 6 pour lutter contre l'infection fongique des céréales causées par *Puccinia recondita*.

8. Procédé selon la revendication 7, où le rapport pondéral du triadiméfon au chlorothalonil est dans un intervalle de 1:20 à 1:5.

9. Procédé selon l'une quelconque des revendications 5 à 8, où le triadiméfon est appliqué en une quantité de 0,0025 à 0,099 kg/ha.

10. Procédé selon l'une quelconque des revendications 5 à 8, où le chlorothalonil est appliqué en une quantité de 0,25 à 0,99 kg/ha.

**Patentansprüche**

1. Fungizides Mittel, dadurch gekennzeichnet, daß es als Wirkstoffe Triadimefon oder ein Salz hiervon und Chlorthalonil in einem Gewichtsverhältnis von Triadimefon zu Chlorthalonil im Bereich von 1:50 bis 1:2,5 enthält, wobei es sich bei Triadimefon um 1 - (4 - Chlorphenoxy) - 3,3 - dimethyl - 1 - (1,2,4 - triazol - 1 - yl) - butan - 2 - on und bei Chlorthalonil um Tetrachlorisophthalsäurenitril handelt.

2. Fungizides Mittel, dadurch gekennzeichnet, daß es als Wirkstoffe Triadimefon oder ein Salz hiervon und Chlorthalonil in einem Gewichtsverhältnis von Triadimefon zu Chlorthalonil im Bereich von 1:20 bis 1:1,25 enthält, wobei es sich bei Triadimefon um 1 - (4 - Chlorphenoxy) - 3,3 - dimethyl - 1 - (1,2,4 - triazol - 1 - yl) - butan - 2 - on und bei Chlorthalonil um Tetrachlorisophthalsäurenitril handelt.

3. Fungizides Mittel nach Anspruch 1 oder 2, dadurch gekennzeichnet, daß die genannten Wirkstoffe in einem Gewichtsverhältnis von 1:10 bis 1:2,5 vorhanden sind.

4. Verwendung des fungiziden Mittels nach einem der Ansprüche 1 bis 3 zur Bekämpfung von durch Puccinia recondita bei Getreide hervorgerufenen Pilzinfektionen.

5. Verfahren zu Bekämpfung von Pilzinfektionen bei Kulturpflanzen, dadurch gekennzeichnet, daß man als fungizid wirksame Verbindungen Triadimefon oder ein Salz hiervon und Chlorthalonil in einem Gewichtsverhältnis von Triadimefon zu Chlorthalonil im Bereich von 1:50 bis 1:1,25 verwendet, wobei es sich bei Triadimefon um 1 - (4 - Chlorphenoxy) - 3,3 - dimethyl - 1 - (1,2,4 - triazol - 1 - yl) - butan - 2 - on und bei Chlorthalonil um Tetrachlorisophthalsäurenitril handelt.

6. Verfahren zu Bekämpfung von Pilzinfektionen bei Kulturpflanzen, dadurch gekennzeichnet, daß man als fungizid wirksame Verbindung Triadimefon oder ein Salz hiervon und Chlorthalonil in einem Gewichtsverhältnis von Triadimefon zu Chlorthalonil im Bereich von 1:20 bis 1:1,25 verwendet, wobei es sich bei Triadimefon um 1 - (4 - Chlorphenoxy) - 3,3 - dimethyl - 1 - (1,2,4 - triazol - 1 - yl) - butan - 2 - on und bei Chlorthalonil um Tetrachlorisophthalsäurenitrile handelt.

7. Verfahren nach Anspruch 5 oder 6, dadurch gekennzeichnet, daß man durch Puccinia recondita hervorgerufene Pilzinfektionen bei Getreide bekämpft.

8. Verfahren nach Anspruch 7, dadurch gekenzeichnet, daß man mit einem Gewichtsverhältnis von Triadimefon zu Chlorthalonil im Bereich von 1:20 bis 1:5 arbeitet.

9. Verfahren nach einem der Ansprüche 5 bis 8, dadurch gekennzeichnet, daß man Triadimefon in einer Menge von 0,0025 bis 0,099 kg/ha anwendet.

10. Verfahren nach einem der Ansprüche 5 bis 8, dadurch gekennzeichnet, daß man Chlorthalonil in einer Menge von 0,25 bis 0,99 kg/ha anwendet.